# EUROPEAN PATENT APPLICATION

(11) **EP 2 767 253 A1**
(43) Date of publication of application: **20.08.2014**
(21) Application number: 12840662.6
(22) Date of filing: 29.09.2012
(51) Int. Cl.: A61C 1/06, A61C 1/08

(54) **DENTAL DRILL HEAD**

(30) Priority: 12.10.2011 CN 201110324919; 26.05.2012 CN 201210183800; 14.09.2012 CN 201210354925
(71) Applicant: Zhengzhou Zezheng Technical Services Ltd., Zhengzhou, Henan 450000 (CN)
(72) Inventor: LIU, Xiaoxia, ZHENGZHOU, HENAN 450000 (CN); ZHANG, Chun, ZHENGZHOU, HENAN 450000 (CN)
(74) Representative: Intès, Didier Gérard André
(86) International application number: PCT/CN2012/082406
(87) International publication number: WO 2013/053298

(57) **Abstract**

Disclosed is a dental drill head, consisting of a head housing (1), and a wind wheel and bearings (2), wherein the head housing (1) is composed of a head housing cover (5) and a head housing cavity (12), and the wind wheel is composed of a wind wheel shaft (3) and a wind wheel blade (4). An anti-back suction device is formed between the head housing cover (5) and the ends of the corresponding wind wheel shaft (3). The anti-back suction device can be achieved either by setting the head housing cover (5) as a rubber head housing cover (51), or by arranging a rubber piece between the head housing (1) and the wind wheel. The rubber head housing cover (51) and the rubber piece can brake the wind wheel timely just when back-suction occurs so as to reduce the suction of dirt. The dental drill head further comprises a ring-shaped LED lamp, the contact and separation between the top surface of the lamp and an electrically conductive film (63) achieve the switching on and off of the LED lamp, enabling a simplified structure and ease of installation.

## Description

### FIELD OF TECHNOLOGY

The present invention relates to an important grinding tool used in dentistry - a head for a dental drill, in particular for a dental turbine drill.

### BACKGROUND ART

In general, a head for an air-type cutting device used in dentistry is provided with a head part at the top thereof, the required components of a cutting tool being built into the head part, where the components comprise a rotor shaft of the cutting tool, two bearings rotatably supporting the shaft, and an impeller arranged between the two bearing parts; high-pressure air supplied via an air supply route arranged within a handle part of the head impacts the impeller to rotate the cutting tool. Conventional wind wheel shafts and blades for disposable dental drills are entirely composed of injection molded parts, such as in Chinese Patent No. 200520045733.3, in which a wind wheel shaft and bur act in concert through a three-piece spring, or Chinese Patent Application No. 200910001394.1, in which a bur hole of an wind wheel shaft is arranged so as to be in the shape of a spline and so as to clamp a bur shaft via a plastic elastic clip; also, in the aforementioned patent, a wind-resistant round piece is arranged, whereby the moment of inertia is increased. Other disposable dental drills utilize an interference fit between a bur hole and bur shaft or the like; such structures require a special tool to load and unload the bur, and this has proven inconvenient. Although Chinese Patent Application 201020542727.X is also for a push button dental drill it specifically comprises a wedge chuck within a wind wheel shaft, and the wedge chuck is used to clamp a bur. A connecting rod of the wedge chuck extends out of the wind wheel shaft and affixes a retaining board, while a disc spring is arranged between the retaining board and the wind wheel shaft on the outer periphery of the connecting rod, with a clamping force being provided by the disc spring. None of the above-described disposable dental drills has entered the stage of practical usage, for the reason that although China has several different factories producing disposable dental drills having an interference fit imparted by an wind wheel shaft and a bur, the general accuracy of molds in China is 0.04 to 0.06 mm, and the accuracy for injection molding components is even poorer; thus, in an environment of 300,000 revolutions per minute, the poor accuracy leads to imbalances, causing vibration noise, whereby standards are not met, and there is thus no practical use for these types of handpieces. The two above-described dental drills, in which pressure is used to load and unload the bur, have an even more complex structure, greater imbalance during rotation, and greater noise. Moreover, at present with repeat-usage metal dental drills, the price is directly dependent on the machining precision, and the highest prices amount to a hundredfold difference. Furthermore, since the head is to be extended into the oral cavity, a negative pressure is produced within the drill head when the supply of high-pressure air is discontinued and the impeller continues rotating with inertia at high speed, whereby external contaminants are drawn into the air supply route of the head; already, several anti-suck-back handpieces have appeared, but all of these prevent suck-back at the bur insertion site, which is a site with very little space, and thus the considerable precision required for the components used has led to a corresponding increase in cost. An LED light arranged at the front end of the handpiece has thus far been located on the neck of the handpiece; when the handpiece is used in this manner, the effectiveness of the illumination is not ideal, since the angle is problematic. When the LED light is arranged on the lowest part of the dental handpiece, the LED light and the switch are two separate elements and thus occupy too much space on the head; this makes installation difficult, and considerably increases the costs and difficulty of production.

### DISCLOSURE OF THE INVENTION

It is an objective of the present invention to provide an anti-suck-back dental drill head with a simple structure and low costs. In order to resolve a problem in which a rubber cover of an anti-suck-back dental drill head touches the teeth, which has an effect on the rotational speed, a second objective of the present invention is to provide an anti-return-suction dental drill head whereby the rotational speed will not be affected even though the press cover may touch the teeth. A third objective is to resolve the problem of suck-back in the dental drill heads of the prior art and at the same time resolve the problem of dynamic balance during high speed rotation of the wind wheel. A fourth objective of the present invention is to provide an LED lamp assembly to be applied to a dental drill head, the assembly having a simple structure and being easy to install.

In order to solve the aforementioned problems, the present invention employs the following technical scheme:
A dental drill head comprises: a head housing, a wind wheel, and bearings, the head housing being constituted of a head housing cover and a head housing cavity, and the wind wheel being constituted of a wind wheel shaft and wind wheel blades.

An anti-suck-back device is configured between the head housing cover and a wind wheel shaft end part to which the wind wheel shaft corresponds.

The head cover is a rubber head cover, and the periphery of the rubber head cover is affixed onto the head housing cavity.

The rubber head cover snaps onto a wind wheel shaft end surface of the wind wheel.

A brake disc is arranged at one end of the wind wheel shaft of the wind wheel that corresponds to the rubber head cover.

The shapes of the outer surface of the brake disc and the inner surface of the rubber head cover correspond to each other.

A brake disc keyhole that communicates directly to a wind wheel shaft hole of the wind wheel shaft is arranged at the center of the brake disc, and a rubber head cover keyhole is arranged on the rubber head cover so as to correspond to a center hole of the wind wheel shaft.

The fact that the brake disc is arranged at the end of the wind wheel shaft of the wind wheel that corresponds to the rubber head cover means that a bur clamping mechanism is arranged within the wind wheel shaft hole of the wind wheel, the bur clamping mechanism comprising a clamping jaw located on the inside of the wind wheel shaft hole, a clamping jaw rod that is coupled to the clamping jaw, and the brake disc, which is coupled to the top of the clamping jaw rod; a spring is fitted onto the clamping jaw rod between the brake disc and the top of the wind wheel shaft.

The clamping jaw rod and the wind wheel shaft hole engage in the manner of a sliding key.

A rubber piece is arranged between the head housing and the wind wheel; in the natural state, the rubber piece is in contact with both the head housing and the wind wheel at the same time, but in a working state, the rubber piece separates from either the head housing or the wind wheel.

The rubber piece refers to a rubber layer affixed to the inside of the head covering of the head housing; the rubber layer and the head covering together form the cavity, and in the natural state the rubber layer is in contact with the wind wheel shaft end part, while in the working state the rubber layer separates from the wind wheel shaft end part.

The head covering is provided with a vent hole, and the vent hole is linked to the cavity formed by the rubber layer and the head covering.

A rubber pocket is fixed to the inside of the head covering, the rubber pocket being provided with an air outlet hole and being linked to the vent hole; a portion of the rubber pocket not in contact with the head covering is a rubber layer.

The head covering is provided with a window, the periphery of the window being a window slot; an elastic expansion ring inside the rubber pocket fastens the periphery of the rubber pocket into the window slot of the periphery of the window of the head covering.

A retaining ring is arranged on the outside of the window slot of the head covering, and a retaining block is arranged between the retaining ring and the rubber pocket; in the working state, the retaining block stops the rubber pocket from bulging out of the head covering.

The wind wheel shaft end part is provided with a brake disc.

The wind wheel shaft end part is provided with a second brake disc, whereby a brake disc II is arranged on a spring retaining ring; an annular slot I is provided on the brake disc II, and a rubber ring I is arranged within the annular slot I. In the natural state, the rubber ring I is in contact with the head covering, but in the working state the rubber ring I separates from the head covering into the slot due to centrifugal force.

A rubber membrane is provided on the rubber ring I.

An annular slot II is provided to a wind wheel blade side of the wind wheel shaft, and a rubber ring II is arranged within the annular slot II; in the natural state, the rubber ring II is in contact with a bearing seat of the head housing, but in the working state, the rubber ring II separates from the bearing seat into the slot due to centrifugal force.

An LED assembly arranged on the dental drill head has an LED lamp with an annular shape, the upper surface thereof being an electrode; an electroconductive film supported by an insulator is provided on the upper surface of the annular LED lamp. The contact and separation between the electroconductive film and the upper surface of the annular LED lamp constitutes an LED lamp switch, and the LED lamp assembly is fixed onto the head casing and arranged so as to surround the bur.

The electroconductive film is a metallic film.

The electroconductive film is a non-metallic film that has been coated with an electroconductive adhesive.

The non-metallic film is electroconductive polyester or polyvinylchloride.

The annular LED lamp refers to an LED lamp provided on a bottom surface of an annular circuit board, the upper surface of the annular circuit board is a copolar surface.

The annular LED lamp is an annular COB, the upper surface of the annular COB being copolar.

The annular LED lamp is an annular OLED, the upper surface of the annular OLED being copolar.

The present invention, which adopts the aforementioned technical scheme, firstly, makes it possible to reduce the intake of contaminants when suck-back is taking place as the impeller is braked; and secondly, while there is still a positive pressure inside the head, the rubber head covering uses elastic force to brake the impeller and completely prevents the intake of contaminants. Moreover, the structure is simple and costs are low.

Since the pressing area is reduced and the cavity is arranged between the rubber layers and the head covering, the teeth are less susceptible to touching the pressing portion. Even when the teeth do happen to touch the pressing portion, the cavity is so arranged that the teeth still will not touch the brake disc, thus avoiding any effect on the rotational speed; arranging the rubber ring inside the annular slot both prevents suck-back and automatically adjusts the dynamic balance, which is a double advantage and also lowers costs.

The structure is simplified by integrating the LED lamp with the switch for the LED lamp, and accordingly when the present invention is installed in a dental drill handpiece head, it will occupy comparatively less space in the head, and the installation itself will be easier.

### BRIEF DESCRIPTION OF THE DRAWINGS

FIG. 1 is a schematic cutaway structural view of the natural state of the push button head;
FIG. 2 is a schematic cutaway structural view of a positive pressure state within the push button head;
FIG. 3 is a view illustrating the assembly of a bur clamping mechanism;
FIG. 4 is a schematic structural view of the natural state when the rubber pocket is fixed to this inside of the push button covering;
FIG. 5 is a schematic structural view of the operating state when the rubber pocket is fixed to the inside of the push button covering;
FIG. 6 is a schematic structural view of the natural state of the window provided to the head covering;
FIG. 7 is a schematic structural view of the operating state of the window provided to the head covering;
FIG. 8 is a schematic structural view of the retaining block provided to the window provided to the head covering;
FIG. 9 is an enlarged view of a portion "A" in FIG. 5;
FIG. 10 is a schematic structural view of the operating state of the annular slot provided to the brake disc;
FIG. 11 is a schematic structural view of the natural state of the annular slot provided to the brake disc;
FIG. 12 is a plan view of the present invention;
FIG. 13 is a cutaway view during illumination of the LED light source installed in the present invention, the cutaway view being along the K-K line in FIG 1;
FIG. 14 is a cutaway view of when an annular LED lamp of the present invention is a COB surface light source, the cutaway view being along the K-K line in FIG. 1;
FIG. 15 is a cutaway view of when the annular LED lamp of the present invention is an OLED surface light source, the cutaway view being along the K-K line in FIG. 1;

### MODES FOR CARRYING OUT THE INVENTION

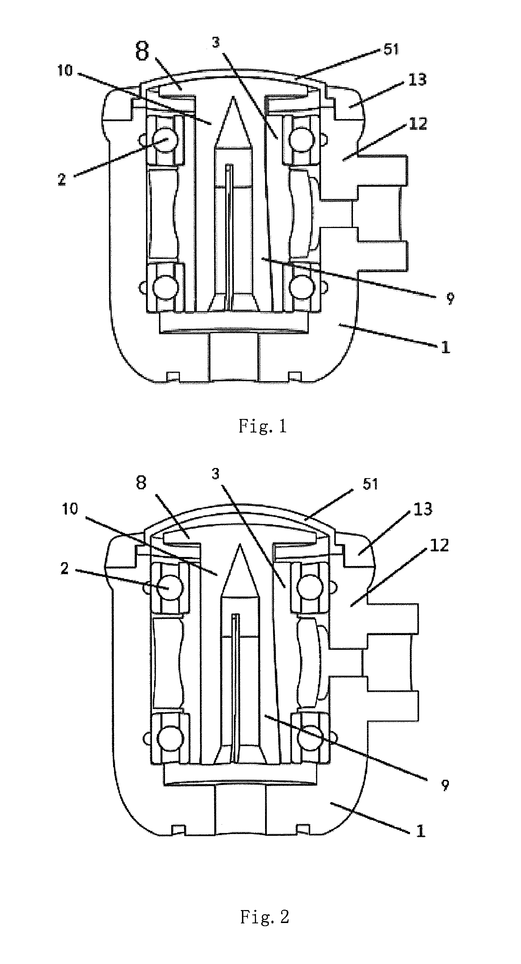

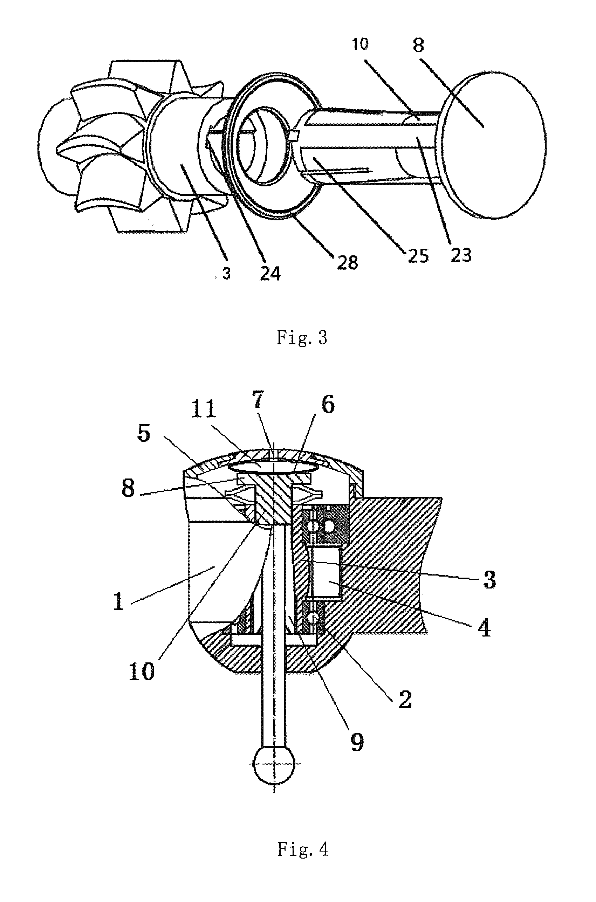

As illustrated in FIG. 1, an anti-suck-back dental drill head is constituted of a head housing 1, a wind wheel, and bearings 2, wherein a head covering of the head housing 1 is a rubber head covering 51, and a threaded ring 13 is used to screw the periphery of the rubber head covering 51 onto a head housing cavity 12. Combined with the view of FIG. 3, a bur clamping mechanism is arranged within a hole of a wind wheel shaft 3 of the wind wheel, the bur clamping mechanism comprising a clamping jaw 9 located within the hole of the turbine shaft, a clamping jaw rod 10 connected to the clamping jaw, and a brake disc 8 connected to a top part of the clamping jaw rod; a spring 28 is fitted onto the clamping jaw rod 10 between the brake disc 8 and the top part of the wind wheel shaft 3. FIGS. 1 and 2 depict the spring 28, and FIG. 3 includes a handpiece in which there is a butterfly spring, the spring being used by the clamping jaws to clamp the bur, at which time a push button is used to load or unload the bur.

The clamping jaw rod 10 is provided with a key 23, the hole of the wind wheel shaft is provided with a key groove 24, and the key 23 is fitted so as to slide into the key groove 24. This sliding key fit signifies that the shapes of the key 23 and of the key groove 24 are enable a spline fit, but the clamping jaw rod is able to move along the axis of the hole of the wind wheel shaft, causing the clamping jaw rod to rotate synchronously with the wind wheel shaft.

When rubber head covering 51 is not snapped onto the upper surface of the brake disc 8, and when the supply of high-pressure air is discontinued, an impeller will continue to rotate at high speed due to inertia, which creates negative pressure inside the head causing the rubber head covering to be sucked onto a wind wheel shaft end surface of the wind wheel; the two parts generate friction and stop the rotation of the wind wheel, thus decreasing the intake of contaminants.

When the rubber head covering 51 is snapped onto the upper surface of the brake disc 8, and when the high-pressure air is supplied, as is illustrated in FIG. 2, the positive pressure of the high-pressure air inside of the head causes the rubber head covering to rise and separate, losing contact with the end surface of the wind wheel shaft of the wind wheel, and also causes the impeller to rotate at high speed; when the supply of high-pressure air is discontinued, the impeller will continue to rotate at high speed due to inertia, which creates negative pressure inside the head and can cause the rubber head covering to clamp by elastic force onto the wind wheel shaft end surface of the wind wheel, thus stopping the rotation of the impeller and entirely preventing the intake of contaminants.

The upper surface of the brake disc 8 is shaped to mate to an inner surface of the rubber head covering 51. At this time, the force of friction created when the brake disc and the rubber head covering are entirely in contact with each other is even greater, thus causing the impeller to be even more readily stopped from rotating.
The above description is an example where the brake disc 8 is provided; when no brake disc 8 is provided, the handpiece is one in which a key is used to load and unload the bur, and not a handpiece in which a push button is used to load and unload the bur. The rubber head covering 51 acts as a brake on the upper end surface of the wind wheel shaft 3 of the wind wheel, the effect of which is not as favorable as when the brake disc 8 is provided, but this too is one mode of carrying out the present invention. When the rubber head covering 51 is not snapped onto the upper end surface of the wind wheel shaft 3 of the wind wheel, trace amounts of contaminants will be taken in, but when the rubber head covering 51 is snapped onto the upper end surface of the wind wheel shaft 3 of the wind wheel, it is also possible to entirely prevent the intake of contaminants, however the effect thereof is not as favorable as when the brake disc 8 is provided. In order to be able to replace the bur, a brake disc key hole that communicates directly with the wind wheel shaft hole of the wind wheel shaft is arranged at the center of the brake disc 8, and a rubber head covering key hole is arranged on the rubber head covering 51 so as to correspond with the center hole of the wind wheel shaft. The described handpiece lacks a bur clamping mechanism, and thus the brake disc 8 is fixed onto the upper end surface of the wind wheel shaft 3, similarly making it possible to prevent suck-back.

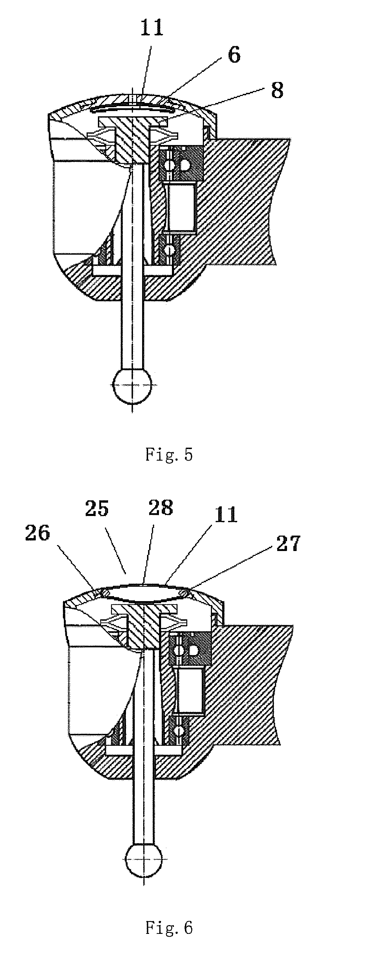

As is illustrated in FIGS. 4 and 5, a dental drill head is constituted of the head housing 1, the wind wheel, and the bearings 2, the wind wheel comprising the wind wheel shaft 3 and also wind wheel blades 4; a rubber piece is arranged between the head housing 1 and the wind wheel. In the natural state, the rubber piece is in contact with both the head housing 1 and the wind wheel at the same time, but in the operating state, the rubber piece separates from either the head housing 1 or the wind wheel. In the operating state, high-pressure air enters into the head and the high-pressure air pushes on the wind wheel and causes same to rotate, while the rubber piece separates from either the head housing or the wind wheel, allowing the wind wheel to rotate at high speed; when operation is stopped, the supply of the high-pressure gas is stopped, and the rubber piece is in contact with both the head housing and the wind wheel at the same time, thus braking the wind wheel and causing same to stop rotating, which has the effect of preventing the intake of contaminants.

The rubber piece is a rubber layer 6 affixed to the inside of the head covering 5 of the head housing 1, and the rubber layer 6 together with the head covering 5 forms a cavity. In the natural state, the rubber layer and the end part of the wind wheel shaft are in contact, as is illustrated in FIG. 1, and in the operating state, the rubber layer 6 is subjected to the air pressure inside of the head housing and separates from the end portion of the wind wheel shaft, as is illustrated in FIG. 2. When operation is stopped, the supply of high-pressure air is stopped, and the rubber layer returns to contacting the end part of the wind wheel shaft, as is illustrated in FIG. 1, thus braking the wind wheel and causing same to stop rotating, which has the effect of preventing the suck-back of contaminants. Since the inside of the cavity is at ambient air pressure, the inside of the head will be at positive pressure during the operating state, and the compression of air inside the cavity will cause the rubber layer 6 to separate from the end portion of the wind wheel shaft; during the natural state, the rubber layer returns to contacting the end part of the wind wheel shaft, as is illustrated in FIG. 1. In FIG. 3, the rubber layer is a rubber pocket 11, but it would also be possible for the periphery of a layer of rubber to be fixed to the inside of the head housing, which could be done by bonding or by a card/slot snap fixation method.

The head covering 5 is provided with a through hole 7, and the through hole 7 communicates with the cavity formed by the rubber layer 6 and the head covering 5. The cavity formed by the rubber layer 6 and the head covering 5 communicates with the outside air, which during the operating state assists the rubber layer to separate from the end portion of the wind wheel shaft. During the operating state, the positive pressure inside the head compels the air inside of the cavity to be expelled via the through hole 7, while in the natural state, the rubber layer returns to being in contact with the end part of the wind wheel shaft, as is illustrated in FIG. 1.

As is depicted in FIG. 6, the rubber pocket 11 is affixed inside the head covering 5, and the rubber pocket 11 is provided with a vent hole 7 to which an air outlet hole 28 communicates; the portion of the rubber pocket 11 not in contact with the head covering 5 is the rubber layer. The fixation of the rubber pocket 11 to the head covering 5 can be achieved simply by fixing one point between the rubber pocket 11 and the head covering 5, for example with bonding fixation.

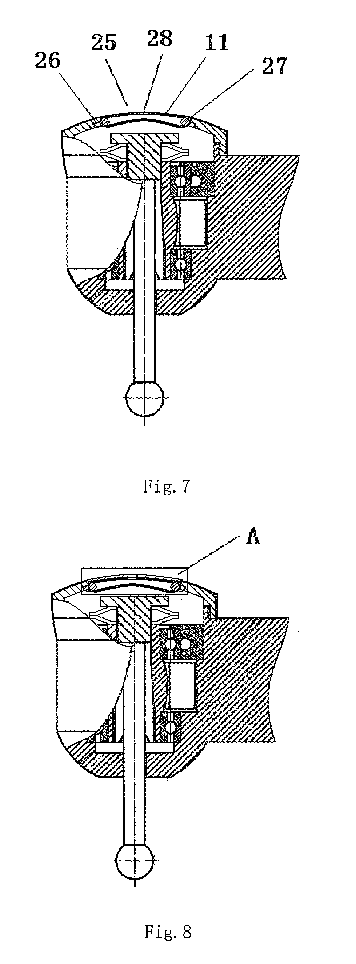

As is depicted in FIGS. 6 and 7, the head covering 5 is provided with a window 25, the periphery of the window 25 being a window slot 26. An elastic expansion ring 27 divides the rubber pocket into two surfaces, one surface serving as a portion of the head covering 5 and the other surface serving as the rubber layer 6.

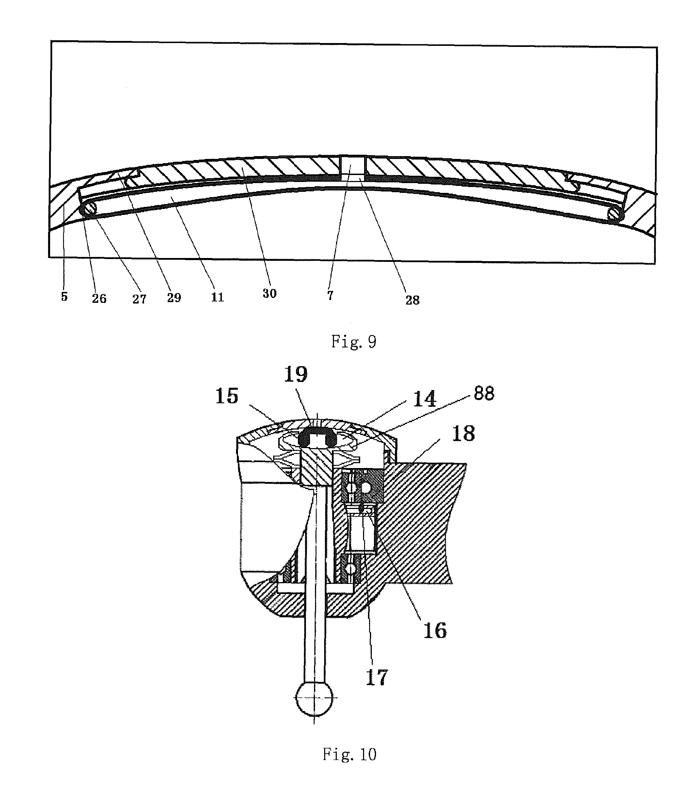

As is depicted in FIGS. 8 and 9, a retaining ring 29 is arranged on the outside of the window slot of the head covering, and a retaining block 30 is arranged between the retaining ring 29 and the rubber pocket 11; in the working state, the retaining block 30 prevents the rubber pocket 11 from bulging out of the head covering 5, but in the natural state, the retaining block 30 can be pressed inside the head.

The end part of the wind wheel shaft 3 is provided with the brake disc 8. Since the contact surface where the brake disc 8 and the rubber layer 6 are in contact with each other has a large surface area, it is conducive for braking the wind wheel to stop same from rotating.

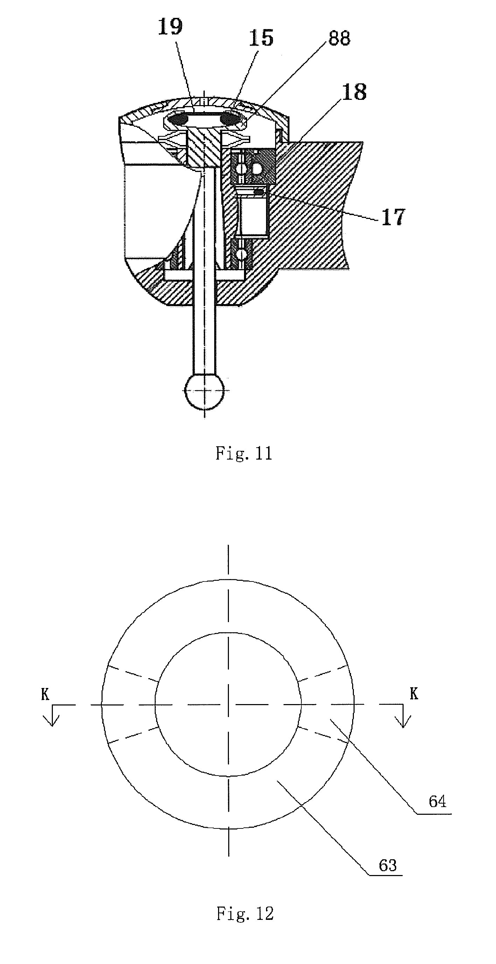

As is depicted in FIGS. 10 and 11, the end part of the wind wheel shaft is provided with a brake disc II 88, an annular slot I 14 is provided on the brake disc II 88, and a rubber ring I 15 is arranged within the annular slot I 14. In the natural state, the rubber ring I 15 is in contact with the head covering 5, but in the working state the rubber ring I 15 separates from the head covering and enters into the slot due to centrifugal force. In this manner, the rubber ring I 15 also has both a braking function as well as a balancing function for automatically adjusting the wind wheel. Even more advantageously, a rubber membrane can be assembled on the rubber ring I 15, increasing the frictional surface area and braking ability.

As is depicted in FIGS. 7 and 8, an annular slot II 16 is provided to a wind wheel blade 4 side of the wind wheel shaft 3, and a rubber ring II 17 is arranged within the annular slot II 16; in the natural state, the rubber ring II 17 is in contact with a bearing seat 18 of the head housing 1, but in the working state, the rubber ring II 17 separates from the bearing seat 18 and enters into the slot due to centrifugal force. The rubber ring I 15 also has both a braking function as well as a balancing function for automatically adjusting the wind wheel.

In FIGS. 7 and 8, the annular slots are provided both to the end part of the wind wheel shaft and to the wind wheel blade side, but in practice it would also be possible to provide only one annular slot; it will be readily understood that it can be arranged on both sides of the wind wheel blade.

The mode described above is not limited to the head covering in the drawings where the bur is loaded and unloaded via a push button; a head covering where a key is used to load and unload the bur can similarly be implemented.

With respect to the heads where the bur is inserted or removed or where the bur is loaded and unloaded using a key, the brake pad 8 can be directly arranged on the end part of the wind wheel shaft, with the through hole provided to the center of the brake pad 8 being used for the insertion of an ejector pin or key; the drawings omit a depiction of such circumstances.

The drawings depict a head where the bur is loaded and unloaded using a push button, the wind wheel shaft 3 being provided with the clamping jaw hole and the clamping jaw 9 inside the clamping jaw hole being directly connected to the clamping jaw rod 10; the clamping jaw rod 10 extends out of the clamping jaw hole and is fixed at an end part to the spring retaining ring 24. In the drawings a disc spring is retained by the spring retaining ring 24; similarly a butterfly coil spring retained by the spring retaining ring is capable of being used; the spring retaining ring 24 is the end part of the wind wheel shaft 3. The increased diameter of the spring retaining ring is the brake disc 8, and the clamping jaw 9, the clamping jaw rod 10, and the spring retaining ring 24 integrally combine to serve as a clamping piece. The material of the wind wheel and the clamping piece can be plastic, or can be metal; costs are lower when metal die-casting is used. A disc spring is provided between the end of the wind wheel shaft and the spring retaining ring 24. During installation, the clamping jaw 9 is clasped and inserted into the conical clamping jaw hole, and the bur is inserted into the clamping jaw. With respect to the head where the bur is inserted or removed or where the bur is loaded and unloaded using a key, since no clamping piece is provided, the end part of the clamping jaw hole is thus equivalent to the end part of the wind wheel shaft.

The present invention is not limited to the embodiment described above; any scheme that is equivalent to the present invention and any technology described by the present invention fall under the scope of the present invention.

As is illustrated in FIGS. 12 to 15, the LED lamp of the present invention is annular, the upper surface thereof (meaning the back surface of the light-emitting surface) being an electrode. The upper surface of the annular LED lamp is provided with an electroconductive thin-film 63 supported by an insulator 64, where an LED lamp switch is constituted of contact between and separation of the electroconductive thin-film 63 and the upper surface of the annular LED lamp.

The above-described electroconductive thin-film 63 can be a metallic thin-film, or can be an electroconductive adhesive coated onto a non-metallic thin-film. When the electroconductive thin-film 63 is a metallic thin-film, the thin-film can be silver foil, copper foil, aluminum foil, or the like; when the electroconductive thin-film 63 is a non-metallic thin film, the thin-film can be an electroconductive polyester or polyvinylchloride. In the case of a polyester, polysulfide ester can be used.

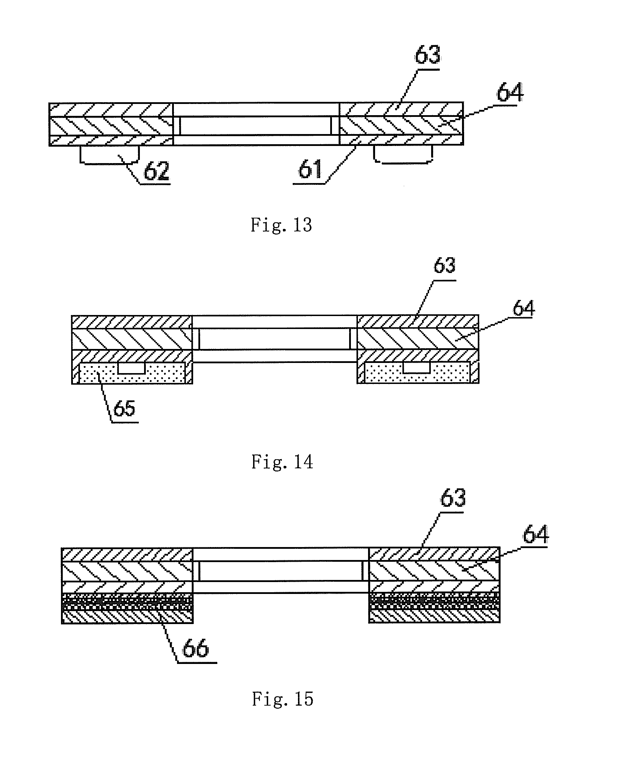

The above-described annular LED lamp can have a variety of different forms:
(1) The annular LED lamp refers to an LED lamp 62 provided on a bottom surface of an annular circuit board 61, the LED lamp 62 being a point light source; under such circumstances, the upper surface of the annular circuit board 61 is a copolar surface, as is illustrated in FIG. 13.
(2) The annular LED lamp is an annular COB surface light source 65, the upper surface of the annular COB light source 65 being copolar; an integrated LED light source is arranged in an annular manner below the upper surface of the COB light source and is encapsulated with a sealing compound. The sealing compound contains a phosphor powder, as is depicted in FIG. 14.
(3) The annular LED lamp is an annular OLED surface light source 66, the upper surface of the annular OLED surface light source 66 being copolar; the upper surface of the annular OLED surface light source 66 is a negative electrode, and an electron transport layer, organic light-emitting layer, hole transport layer, and glass substrate are formed in the stated order therebelow. The glass substrate is a positive electrode, and the annular OLED surface light source is thus configured, as is illustrated in FIG. 15.

It must be stated that the above-described COB and OLED light emission are both prior art, but the annular shape of the COB and the OLED is distinct from the prior art.

The operating principle of the present invention is that the present invention will be arranged on an air outlet channel of a dental drill handpiece. When air is flowing, the electroconductive thin-film 63 and the annular LED lamp are in contact and the circuit is closed, thus causing the LED lamp to begin illuminating; when air flow ceases, the electroconductive thin-film 63 and the annular LED lamp are separated, and the circuit is broken, thus turning off the LED lamp.

## Claims

1. A dental drill head, comprising a head housing, a wind wheel, and bearings, the dental drill head being **characterized in that**: the head housing is constituted of a head housing covering and a head housing cavity, and the wind wheel is constituted of a wind wheel shaft and wind wheel blades.

2. The dental drill head as set forth in claim 1, **characterized in that**: an anti-suck-back device is configured between the head housing covering and an end part of the wind wheel shaft corresponding to the wind wheel shaft.

3. The dental drill head as set forth in claim 2, **characterized in that**: the head covering of the head housing is a rubber head covering, and the periphery of the rubber head covering is fixed onto the cavity of the head housing.

4. The dental drill head as set forth in claim 3, **characterized in that**: the rubber head covering snaps onto the end surface of the wind wheel shaft of the wind wheel.

5. The dental drill head as set forth in one of claim 3 and claim 4, **characterized in that**: a brake disc is arranged between the wind wheel shaft of the wind wheel and one end corresponding to the rubber head covering.

6. The dental drill head as set forth in claim 5, **characterized in that**: the shapes of the outer surface of the brake disc and the inner surface of the rubber head cover correspond to each other.

7. The dental drill head as set forth in claim 6, **characterized in that**: a brake disc keyhole that communicates directly to a wind wheel shaft hole of the wind wheel shaft is arranged at the center of the brake disc, and a rubber head cover keyhole is arranged on the rubber head cover so as to correspond to a center hole of the wind wheel shaft.

8. The dental drill head as set forth in claim 6, **characterized in that**: the fact that the brake disc is arranged between the wind wheel shaft of the wind wheel and one end corresponding to the rubber head covering signifies that a bur clamping mechanism is arranged inside a hole of the wind wheel shaft of the wind wheel, the bur clamping mechanism comprising a clamping jaw positioned inside the hole of the wind wheel shaft, a clamping jaw rod communicating with the clamping jaw, and a brake disc communicating with the clamping jaw rod, a spring being fitted onto the clamping jaw rod between the brake disc and a neck part of the wind wheel shaft.

9. The dental drill head as set forth in claim 8, **characterized in that**: the clamping jaw rod has a sliding key fit with the hole of the wind wheel shaft.

10. The dental drill head as set forth in claim 2, **characterized in that**: a rubber piece is arranged between the head housing (1) and the wind wheel, and in a natural state, the rubber piece is simultaneously in contact with both the head housing (1) and the brake disc of the end part of the wind wheel, but in a working state, the rubber piece separates from either the head covering or the wind wheel.

11. The dental drill head as set forth in claim 10, wherein the rubber piece signifies that a rubber layer (6) is fixed to the inside of the head covering (5) of the head housing (1), the rubber layer (6) and the head covering (5) forming a cavity, where in the natural state the rubber layer (6) is in contact with the end part of the wind wheel shaft (3), but in the working state the rubber layer (6) separates from the end part of the wind wheel shaft (3).

12. The dental drill head as set forth in claim 11, **characterized in that**: the head covering (5) is provided with a vent hole (7), the vent hole (7) communicating with the cavity formed by the rubber layer (6) and the head covering (5).

13. The dental drill head as set forth in claim 12, **characterized in that**: a rubber pocket (11) is fixed to the inside of the head covering (5), the rubber pocket (11) being provided with an air outlet hole (28) in communication with the vent hole (7), and the portion of the rubber pocket (11) not in contact with the head covering (5) is the rubber layer.

14. The dental drill head as set forth in claim 13, **characterized in that**: the head covering (5) is provided with a window (25), the periphery of the window (25) being a window slot (26), and an elastic expansion ring (27) on the inside of the rubber pocket (11) snapping the periphery of the rubber pocket into the window slot (26) of the periphery of the window (25) of the head covering.

15. The dental drill head as set forth in claim 14, **characterized in that**: a retaining ring (29) is arranged on the outside of the window slot of the head covering, and a retaining block (30) is arranged between the retaining ring (29) and the rubber pocket (11), where, in the working state, the retaining block (30) stops the rubber pocket (11) from bulging out of the head covering (5).

16. The dental drill head as set forth in one of claim 10 to 15, **characterized in that**: the wind wheel shaft end part is provided with a brake disc.

17. The dental drill head as set forth in claim 10, **characterized in that**: the wind wheel shaft end portion is provided with a brake disc II (88) or a brake disc II (88) is arranged on the spring retaining ring (24), an annular slot I (14) being provided on the brake disc II (88), and a rubber ring I (15) being arranged within the annular slot I (14), where in the natural state, the rubber ring 1 (15) is in contact with the head covering (5), but in the working state the rubber ring I (15) separates from the head covering (5) and enters the slot due to centrifugal force.

18. The dental drill head as set forth in claim 17, **characterized in that**: a rubber membrane (19) is provided on the rubber ring I (15).

19. The dental drill head as set forth in claim 10, **characterized in that**: an annular slot II (16) is provided to a wind wheel blade (4) side of the wind wheel shaft (3), and a rubber ring II (17) is arranged within the annular slot II (16), where in the natural state, the rubber ring II (17) is in contact with a bearing seat (18) of the head housing (1), but in the working state, the rubber ring II (17) separates from the bearing seat (18) and enters the slot due to the centrifugal force.

20. An LED assembly arranged in the dental drill head as set forth in claim 1, **characterized in that**: an LED lamp has an annular shape, the upper surface thereof being an electrode, and an electroconductive film supported by an insulator is provided on the upper surface of the annular LED lamp, where the contact and separation between the electroconductive film and the upper surface of the annular LED lamp constitutes an LED lamp switch, and the LED lamp assembly is fixed onto the head casing and arranged so as to surround the bur.

21. The LED assembly as set forth in claim 20, **characterized in that**: the electroconductive film is a metallic film.

22. The LED assembly arranged on a dental drill head as set forth in claim 20, **characterized in that**: the electroconductive film is an electroconductive adhesive coated onto a non-metallic film.

23. The LED assembly as set forth in claim 22, **characterized in that**: the non-metallic film is electroconductive polyester or polyvinylchloride.

24. The LED assembly as set forth in one of claim 20-23, **characterized in that**: the annular LED lamp refers to an LED lamp provided on a bottom surface of an annular circuit board, the upper surface of the annular circuit board is a copolar surface.

25. The LED assembly as set forth in one of claim 20-23, **characterized in that**: the annular LED lamp is an annular COB, the upper surface of the annular COB being copolar.

26. The LED assembly as set forth in one of claim 20-23, **characterized in that**: the annular LED lamp is an annular OLED, the upper surface of the annular OLED being copolar.
